# EUROPEAN PATENT APPLICATION

(11) **EP 4 838 979 A1**
(43) Date of publication of application: **11.11.2026**
(21) Application number: 24915142.4
(22) Date of filing: 24.12.2024
(51) Int. Cl.: H04W 72/0446

(54) **BISTATIC SENSING METHOD, COMMUNICATION DEVICE, APPARATUS, AND STORAGE MEDIUM**

(30) Priority: 03.01.2024 CN 202410009326
(71) Applicant: Datang Mobile Communications Equipment Co., Ltd., Beijing 100085 (CN)
(72) Inventor: CAI, Yu, Beijing 100085 (CN)
(74) Representative: Studio Torta S.p.A.
(86) International application number: PCT/CN2024/141783
(87) International publication number: WO 2025/145927

(57) **Abstract**

The present disclosure provides a bistatic sensing method, a communication device, an apparatus, and a storage medium. The method comprises: taking turns with a peer device to send and receive sensing signals, for sensing a sensing target, wherein the taking turns with a peer device to send and receive sensing signals comprises: receiving a sensing signal from the peer device on a first time domain resource; determining a transmission parameter on the basis of the sensing signal received on the first time domain resource, the transmission parameter comprising a sending parameter used for sending the sensing signal; and using the sending parameter to send a sensing signal on a second time domain resource.

## Description

### CROSS-REFERENCES TO RELATED APPLICATION

The present application claims priority to Chinese Patent Application No. 202410009326.4 filed on January 3, 2024, entitled "Bistatic Sensing Method, Communication Device, Apparatus, and Storage Medium", which is hereby incorporated by reference in its entirety.

### FIELD

The present application relates to the field of radio communications, and in particular, to a bistatic sensing method, a communication device, an apparatus, and a storage medium.

### BACKGROUND

Integrated sensing and communication (which may be briefly referred to as ISAC) refers to realizing a unified design of communication and sensing functions through means such as joint design of air interface and protocol, multiplexing of time-frequency-spatial resources, and sharing of hardware devices, to enable a wireless network to realize a sensing function while performing communication interaction, thereby realizing the improvement of overall network performance and service capabilities.

Bistatic sensing refers to a sensing manner in which a sensing signal sender and a sensing signal receiver are separated in space. Regarding how to continuously sense a moving target under the bistatic sensing manner, there is no clear solution yet.

### BRIEF SUMMARY

To address the problems in the related art, the present application provides a bistatic sensing method, a communication device, an apparatus, and a storage medium.

Embodiments of the present application provide a bistatic sensing method, including:
alternately sending and receiving a sensing signal with a peer device, to sense a sensing target; where
alternately sending and receiving the sensing signal with the peer device includes:
   receiving a first sensing signal from the peer device on a first time-domain resource;
   determining a transmission parameter based on the first sensing signal received on the first time-domain resource, where the transmission parameter includes a transmit parameter for sending a second sensing signal; and
   sending the second sensing signal by using the transmit parameter on a second time-domain resource.

In some embodiments, determining the transmission parameter based on the first sensing signal received on the first time-domain resource includes:
determining sensing data associated with the sensing target based on the first sensing signal received on the first time-domain resource; and
determining the transmission parameter based on the sensing data associated with the sensing target.

In some embodiments, the transmission parameter further includes a receive parameter for receiving a sensing signal, and alternately sending and receiving the sensing signal with the peer device further includes:
receiving the sensing signal from the peer device by using the receive parameter on a third time-domain resource.

In some embodiments, the method further includes:
receiving time-domain resource indication information; and
determining a time-domain resource used for sending the second sensing signal and/or a time-domain resource used for receiving the first sensing signal based on the time-domain resource indication information, where the time-domain resource used for receiving the first sensing signal includes the first time-domain resource, and the time-domain resource used for sending the second sensing signal includes the second time-domain resource.

In some embodiments, the method further includes:
receiving time-domain resource indication information; and
determining a time-domain resource used for sending the sensing signal and/or a time-domain resource used for receiving the sensing signal based on the time-domain resource indication information, where the time-domain resource used for receiving the sensing signal includes the first time-domain resource and/or the third time-domain resource, and the time-domain resource used for sending the sensing signal includes the second time-domain resource.

In some embodiments, the time-domain resource indication information includes first time-domain resource indication information, and the first time-domain resource indication information is used for indicating the time-domain resource used for sending the sensing signal and/or the time-domain resource used for receiving the sensing signal.

In some embodiments, the time-domain resource indication information includes second time-domain resource indication information and/or third time-domain resource indication information, the second time-domain resource indication information is used for indicating a next or a next group of time-domain resources used for receiving the sensing signal, and the third time-domain resource indication information is used for indicating a next or a next group of time-domain resources used for sending the sensing signal.

In some embodiments, the time-domain resource indication information includes a resource configuration or a resource identifier of the indicated time-domain resource.

In some embodiments, the next or the next group of time-domain resources used for receiving the sensing signal is one or more time-domain resources after a first duration from a sending moment of the second time-domain resource indication information, and the next or the next group of time-domain resources used for sending the sensing signal is one or more time-domain resources after a second duration from a sending moment of the third time-domain resource indication information.

In some embodiments, receiving the time-domain resource indication information includes:
receiving the time-domain resource indication information sent from the peer device.

In some embodiments, the method further includes:
initiating or terminating the process of alternately sending and receiving the sensing signal with the peer device based on a speed of the sensing target and/or sensing performance.

In some embodiments, initiating or terminating the process of alternately sending and receiving the sensing signal with the peer device based on the speed of the sensing target and/or the sensing performance includes:
initiating the process of alternately sending and receiving the sensing signal with the peer device in case that a first condition is met; where
the first condition includes one or more of the following:
   a speed of the sensing target is lower than or equal to a first threshold; or
   a sensing signal receive power is higher than or equal to a second threshold.

In some embodiments, initiating or terminating the process of alternately sending and receiving the sensing signal with the peer device based on the speed of the sensing target and/or the sensing performance includes:
terminating the process of alternately sending and receiving the sensing signal with the peer device in case that a second condition is met; where
the second condition includes one or more of the following:
   a speed of the sensing target is higher than or equal to a third threshold; or
   a sensing signal receive power is lower than or equal to a fourth threshold.

In some embodiments, the method further includes:
sending first indication information to the peer device, where the first indication information is used for indicating initiating or terminating the process of alternately sending and receiving the sensing signal.

In some embodiments, the method further includes:
receiving second indication information sent from the peer device; and
initiating or terminating the process of alternately sending and receiving the sensing signal with the peer device based on the second indication information.

In some embodiments, the method further includes:
receiving third indication information sent from the peer device, where the third indication information is used for indicating sensing data associated with the sensing target and/or parameter information associated with the transmission parameter; and
determining a transmission parameter used for transmitting a next or a next group of sensing signals based on the third indication information.

In some embodiments, the method further includes:
sending fourth indication information to the peer device, where the fourth indication information is used for indicating the sensing data associated with the sensing target and/or the parameter information associated with the transmission parameter.

In some embodiments, sending the fourth indication information to the peer device includes:
sending the fourth indication information to the peer device in case that a third condition is met; where
the third condition includes one or more of the following:
   a speed of the sensing target is higher than or equal to a fifth threshold; or
   a sensing signal receive power is lower than or equal to a sixth threshold.

In some embodiments, the time-domain resource indication information is a radio resource control (RRC) message, an RRC information element (IE), a medium access control control element (MAC CE), or physical layer indication information.

In some embodiments, the transmit parameter includes one or more of a send beam parameter or a send power.

In some embodiments, the receive parameter includes a receive beam parameter.

In some embodiments, the sensing data associated with the sensing target includes one or more of the following:
a speed of the sensing target, a distance from the sensing target, a direction of the sensing target, a position of the sensing target, a sensing measurement quantity associated with the sensing target, a speed offset of the sensing target, a distance offset of the sensing target, a direction offset of the sensing target, a sensing measurement quantity offset of the sensing target, a speed range of the sensing target, a distance range of the sensing target, or a direction range of the sensing target.

Embodiments of the present application provide a communication device, including a memory, a transceiver, and a processor, where
the memory is used for storing a computer program; the transceiver is used for transmitting and receiving data under control of the processor; and the processor is used for reading the computer program in the memory and performing the following operations:
alternately sending and receiving a sensing signal with a peer device, to sense a sensing target; where
alternately sending and receiving the sensing signal with the peer device includes:
receiving a first sensing signal from the peer device on a first time-domain resource;
determining a transmission parameter based on the first sensing signal received on the first time-domain resource, where the transmission parameter includes a transmit parameter for sending a second sensing signal; and
sending the second sensing signal by using the transmit parameter on a second time-domain resource.

In some embodiments, determining the transmission parameter based on the first sensing signal received on the first time-domain resource includes:
determining sensing data associated with the sensing target based on the first sensing signal received on the first time-domain resource; and
determining the transmission parameter based on the sensing data associated with the sensing target.

In some embodiments, the transmission parameter further includes a receive parameter for receiving a sensing signal, and alternately sending and receiving the sensing signal with the peer device further includes:
receiving the sensing signal from the peer device by using the receive parameter on a third time-domain resource.

In some embodiments, the method further includes:
receiving time-domain resource indication information; and
determining a time-domain resource used for sending the second sensing signal and/or a time-domain resource used for receiving the first sensing signal based on the time-domain resource indication information, where the time-domain resource used for receiving the first sensing signal includes the first time-domain resource, and the time-domain resource used for sending the second sensing signal includes the second time-domain resource.

In some embodiments, the method further includes:
receiving time-domain resource indication information; and
determining a time-domain resource used for sending the sensing signal and/or a time-domain resource used for receiving the sensing signal based on the time-domain resource indication information, where the time-domain resource used for receiving the sensing signal includes the first time-domain resource and/or the third time-domain resource, and the time-domain resource used for sending the sensing signal includes the second time-domain resource.

In some embodiments, the time-domain resource indication information includes first time-domain resource indication information, and the first time-domain resource indication information is used for indicating the time-domain resource used for sending the sensing signal and/or the time-domain resource used for receiving the sensing signal.

In some embodiments, the time-domain resource indication information includes second time-domain resource indication information and/or third time-domain resource indication information, the second time-domain resource indication information is used for indicating a next or a next group of time-domain resources used for receiving the sensing signal, and the third time-domain resource indication information is used for indicating a next or a next group of time-domain resources used for sending the sensing signal.

In some embodiments, the time-domain resource indication information includes a resource configuration or a resource identifier of the indicated time-domain resource.

In some embodiments, the next or the next group of time-domain resources used for receiving the sensing signal is one or more time-domain resources after a first duration from a sending moment of the second time-domain resource indication information, and the next or the next group of time-domain resources used for sending the sensing signal is one or more time-domain resources after a second duration from a sending moment of the third time-domain resource indication information.

In some embodiments, receiving the time-domain resource indication information includes:
receiving the time-domain resource indication information sent from the peer device.

In some embodiments, the method further includes:
initiating or terminating the process of alternately sending and receiving the sensing signal with the peer device based on a speed of the sensing target and/or sensing performance.

In some embodiments, initiating or terminating the process of alternately sending and receiving the sensing signal with the peer device based on the speed of the sensing target and/or the sensing performance includes:
initiating the process of alternately sending and receiving the sensing signal with the peer device in case that a first condition is met; where
the first condition includes one or more of the following:
   a speed of the sensing target is lower than or equal to a first threshold; or
   a sensing signal receive power is higher than or equal to a second threshold.

In some embodiments, initiating or terminating the process of alternately sending and receiving the sensing signal with the peer device based on the speed of the sensing target and/or the sensing performance includes:
terminating the process of alternately sending and receiving the sensing signal with the peer device in case that a second condition is met; where
the second condition includes one or more of the following:
   a speed of the sensing target is higher than or equal to a third threshold; or
   a sensing signal receive power is lower than or equal to a fourth threshold.

In some embodiments, the method further includes:
sending first indication information to the peer device, where the first indication information is used for indicating initiating or terminating the process of alternately sending and receiving the sensing signal.

In some embodiments, the method further includes:
receiving second indication information sent from the peer device; and
initiating or terminating the process of alternately sending and receiving the sensing signal with the peer device based on the second indication information.

In some embodiments, the method further includes:
receiving third indication information sent from the peer device, where the third indication information is used for indicating sensing data associated with the sensing target and/or parameter information associated with the transmission parameter; and
determining a transmission parameter used for transmitting a next or a next group of sensing signals based on the third indication information.

In some embodiments, the method further includes:
sending fourth indication information to the peer device, where the fourth indication information is used for indicating sensing data associated with the sensing target and/or the parameter information associated with the transmission parameter.

In some embodiments, sending the fourth indication information to the peer device includes:
sending the fourth indication information to the peer device in case that a third condition is met; where
the third condition includes one or more of the following:
   a speed of the sensing target is higher than or equal to a fifth threshold; or
   a sensing signal receive power is lower than or equal to a sixth threshold.

In some embodiments, the time-domain resource indication information is an RRC message, an RRC IE, a MAC CE, or physical layer indication information.

In some embodiments, the transmit parameter includes one or more of a send beam parameter or a send power.

In some embodiments, the receive parameter includes a receive beam parameter.

In some embodiments, the sensing data associated with the sensing target includes one or more of the following:
a speed of the sensing target, a distance from the sensing target, a direction of the sensing target, a position of the sensing target, a sensing measurement quantity associated with the sensing target, a speed offset of the sensing target, a distance offset of the sensing target, a direction offset of the sensing target, a sensing measurement quantity offset of the sensing target, a speed range of the sensing target, a distance range of the sensing target, or a direction range of the sensing target.

Embodiments of the present application provide a bistatic sensing apparatus, including:
a transmit unit 500, configured to alternately send and receive a sensing signal with a peer device, to sense sensing a sensing target; where
alternately sending and receiving the sensing signal with the peer device includes:
   receiving a first sensing signal from the peer device on a first time-domain resource;
   determining a transmission parameter based on the first sensing signal received on the first time-domain resource, where the transmission parameter includes a transmit parameter for sending a second sensing signal; and
   sending the second sensing signal by using the transmit parameter on a second time-domain resource.

Embodiments of the present application further provide a non-transitory readable storage medium storing a computer program, where the computer program is used to cause a processor to perform the bistatic sensing method as described above.

Embodiments of the present application further provide a communication device storing a computer program, where the computer program is used to cause the communication device to perform the bistatic sensing method as described above.

Embodiments of the present application further provide a processor-readable storage medium storing a computer program, where the computer program is used to cause a processor to perform the bistatic sensing method as described above.

Embodiments of the present application further provide a chip product storing a computer program, where the computer program is used to cause the chip product to perform the bistatic sensing method as described above.

By the bistatic sensing method, the communication device, the apparatus, and the storage medium according to the embodiments of present application, after receiving the sensing signal from the peer device on the first time-domain resource, the sensing device determines the transmit parameter based on the first sensing signal received on the first time-domain resource, and then sends the second sensing signal by using the transmit parameter on the second time-domain resource, which is capable of adaptively adjusting the transmit parameter in the process of alternately sending and receiving to maintain continuous sensing of the sensing target, not only solving the problem of continuously sensing a moving target under the bistatic sensing manner, but also avoiding signaling interaction and saving signaling overhead.

### BRIEF DESCRIPTION OF THE DRAWINGS

To illustrate solutions in the embodiments of the present application more clearly, the drawings need to be used in the descriptions of the embodiments are briefly described below. The drawings in the following description are some embodiments of the present application, and other drawings may be obtained based on these drawings without any creative work for those skilled in the art.
Fig. 1 is a schematic flowchart of a bistatic sensing method according to an embodiment of the present application;
Fig. 2 is an exemplary diagram of time-domain resources including multiple transmissions of a sensing signal according to an embodiment of the present application;
Fig. 3 is an exemplary diagram of a bistatic sensing process according to an embodiment of the present application;
Fig. 4 is a schematic structural diagram of a communication device according to an embodiment of the present application; and
Fig. 5 is a schematic structural diagram of a bistatic sensing apparatus according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

In the embodiments of the present application, the term "multiple" refers to two or more than two, and other quantifiers are similar.

The terms "first", "second", etc. in the embodiments of the present application are used to distinguish similar objects, rather than to describe a specific order or chronological sequence. It should be understood that the terms used in such a way are interchangeable under appropriate circumstances, so that the embodiments of the present application may be implemented in sequences other than those illustrated or described herein. Moreover, the objects distinguished by "first" and "second" usually belong to a same type, and the number of objects is not limited. For example, a first object may be one or more.

A clear and complete description of the solutions in the embodiments of the present application is provided below in conjunction with the accompanying drawings. These embodiments are only a part of the embodiments of the present application, and not all of the embodiments. All other embodiments obtained by those skilled in the art based on the embodiments of the present application without any creative work belong to the scope of the present application.

Integrated sensing and communication (which may be briefly referred to as ISAC) refers to realizing a unified design of communication and sensing functions through means such as joint design of air interface and protocol, multiplexing of time-frequency-spatial resources, and sharing of hardware devices, to enable a wireless network to realize a sensing function while performing communication interaction, thereby realizing the improvement of overall network performance and service capabilities. Wireless sensing is a technology that uses a wireless signal to acquire feature information of an environment and/or an object in the environment (e.g., shape, size, direction, speed, position, distance between objects, or relative motion, etc.). Wireless sensing services rely on an analysis of transmission, reflection, and scattering of wireless sensing signals. As a part of a wireless communication network, wireless sensing services provide the possibility of enhancing the use of telecommunications infrastructure in fields such as object detection and tracking, environmental monitoring, and human motion monitoring. Wireless sensing services provide input for various vertical fields (including drones, smart homes, vehicle to everything (V2X), factories, etc.). Exemplarily, some specific use cases include:
(1) object and intruder detection for predefined security areas around smart homes, highways, railways, factories, and critical infrastructure;
(2) collision avoidance and trajectory tracking for drones, vehicles, and automated guided vehicles;
(3) automatic steering and navigation;
(4) public safety search and rescue;
(5) rainfall monitoring and flood monitoring; and
(6) health and motion monitoring.

A base station and a terminal (also referred to as User Equipment, UE) in an ISAC system need to perform sending and/or receiving of a wireless signal. The base station or the terminal may acquire sensing measurement data based on the received the wireless signal, and may obtain sensing information based on the sensing measurement data.

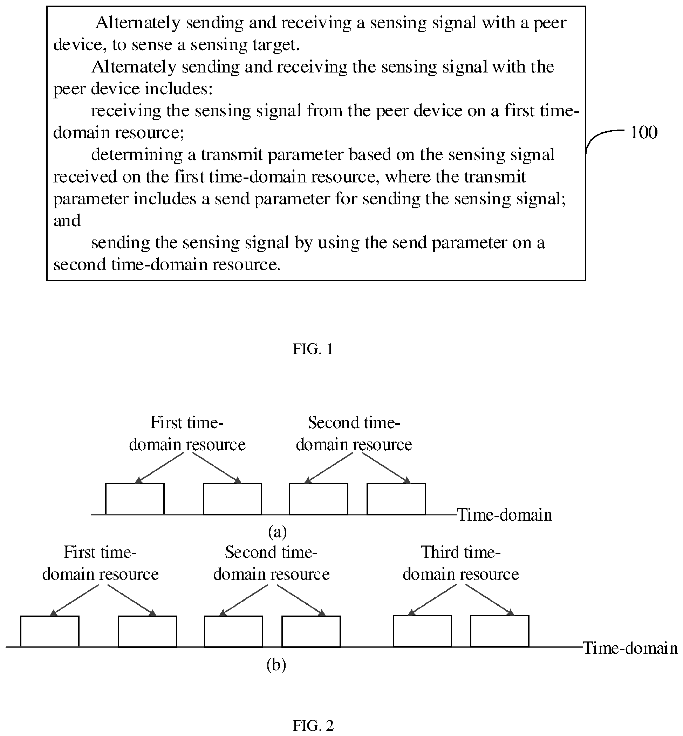

Fig. 1 is a schematic flowchart of a bistatic sensing method according to an embodiment of the present application. As shown in Fig. 1, the method includes the following step:
step 100: alternately sending and receiving a sensing signal with a peer device, to sense a sensing target.

Alternately sending and receiving the sensing signal with the peer device includes:
receiving a first sensing signal from the peer device on a first time-domain resource;
determining a transmission parameter based on the first sensing signal received on the first time-domain resource, where the transmission parameter includes a transmit parameter for sending a second sensing signal; and
sending the second sensing signal by using the transmit parameter on a second time-domain resource.

Specifically, an executing entity of the method is any sensing device in the process of bistatic sensing. For example, assuming that sensing devices in the process of bistatic sensing are respectively referred to as a first device and a second device, the executing entity of the method is the first device (the peer device is the second device) or the second device (the peer device is the first device).

The first device and the second device may be two devices separated in space, and both the first device and the second device may send and receive sensing signals. The first device may be a network device (e.g., a base station) or a terminal, and the second device may also be a network device or a terminal. The first device or the second device is a logical device, and the first device or the second device may be formed by multiple modules, multiple functions, or multiple devices.

The sensing signal refers to a wireless signal used for sensing. The sensing signal may be a wireless signal dedicated to sensing, or the sensing signal may be a wireless signal simultaneously used for sensing and communication.

The second time-domain resource is a time-domain resource after the first time-domain resource. In the process of bistatic sensing, sensing devices alternately sending and receiving includes the following steps. A sensing device (taking the second device as an example, its peer device is the first device) receives a sensing signal sent from the peer device on a first time-domain resource, and then the second device determines a transmission parameter based on the sensing signal received on the first time-domain resource, where the transmission parameter includes a transmit parameter used for sending the sensing signal. Subsequently, the second device sends the sensing signal by using the transmit parameter on the second time-domain resource. When the first device receives the sensing signal sent from the second device on the second time-domain resource, the first device may determine a transmission parameter (including a transmit parameter used for sending the sensing signal) based on the sensing signal received on the second time-domain resource, and then use the determined transmit parameter for sending a next or a next group of sensing signals, so that the first device and the second device alternately send and receive the sensing signal, and both the first device and the second device may adaptively adjust transmit parameters, thereby maintaining continuous sensing of a sensing target. The sensing target may be any object, for example, may be a vehicle, an organism, a drone, an environment, etc. The sensing target may include one or more sensing targets.

In some embodiments, the transmit parameter includes one or more of a send beam parameter or a send power. The send beam parameter may include at least one of a send beam direction or a send beam width.

The first time-domain resource may include a time-domain resource used for one or more transmissions of the sensing signal. In case that the first time-domain resource contains a time-domain resource used for multiple transmissions of the sensing signal, the peer device sends the sensing signal multiple times on the first time-domain resource, and the sensing device receives the sensing signal sent from the peer device multiple times on the first time-domain resource.

The second time-domain resource may include a time-domain resource used for one or more transmissions of the sensing signal. In case that the second time-domain resource includes a time-domain resource used for multiple transmissions of the sensing signal, the sensing device sends the sensing signal multiple times on the second time-domain resource, and the peer device receives the sensing signal multiple times on the second time-domain resource.

The third time-domain resource described later is also similar, and the subsequent sending or receiving cases are also similar.

The transmission parameter determined by the sensing device or the peer device may be a transmission parameter used for multiple transmissions of the sensing signal. The transmission parameter of each transmission in the multiple transmissions may be identical, or may also be different.

An application scenario including multiple transmissions of the sensing signal may be, for example, sending in multiple directions to scan multiple directions.

Fig. 2 is an exemplary diagram of time-domain resources including multiple transmissions of a sensing signal according to an embodiment of the present application. As shown in part (a) of Fig. 2, the second time-domain resource is after the first time-domain resource, and both the first time-domain resource and the second time-domain resource include a time-domain resource used for multiple transmissions of the sensing signal. As shown in part (b) of Fig. 2, the second time-domain resource is after the first time-domain resource, the third time-domain resource is after the second time-domain resource, and all of the first time-domain resource, the second time-domain resource, and the third time-domain resource include a time-domain resource used for multiple transmissions of the sensing signal. It should be understood that the figure is only an example. In practice, the first time-domain resource, the second time-domain resource, and the third time-domain resource do not necessarily all include a time-domain resource used for two transmissions of the sensing signal. For example, the first time-domain resource includes a time-domain resource used for three transmissions of the sensing signal, the second time-domain resource includes a time-domain resource used for four transmissions of the sensing signal, and so on.

In the present application, sensing signals sent on different time-domain resources may be identical signals, or may also be different signals. This is applicable to cases of transmitting the sensing signals multiple times within the first time-domain resource, the second time-domain resource, or the third time-domain resource (e.g., sensing signals sent multiple times may be identical signals, or may also be different signals), and is also applicable to cases of transmitting sensing signals between the first time-domain resource, the second time-domain resource, or the third time-domain resource (e.g., sensing signals sent on different time-domain resources may be identical signals, or may also be different signals). For example, the first sensing signal is received on the first time-domain resource, and the second sensing signal is sent on the second time-domain resource. The first sensing signal and the second sensing signal can be the same signal or different signals.

It should be noted that, in the process of the sensing devices alternately sending and receiving the sensing signal, the sensing device may determine the transmission parameter based on the sensing signal received on the first time-domain resource. In some cases, the sensing device may also determine the transmission parameter based on other manners, that is, "determining a transmission parameter based on the sensing signal received on the first time-domain resource" is an optional step. For example, in case that the sensing target moves at a high speed or the sensing signal receive power is relatively low, the sensing device may not well sense the target. At this time, the sensing device may not rely on the received sensing signal to determine the transmission parameter, but may determine the transmission parameter through other manners to maintain continuous sensing of the sensing target.

By the bistatic sensing method according to the embodiments of the present application, after receiving the sensing signal from the peer device on the first time-domain resource, the sensing device determines the transmit parameter based on the sensing signal received on the first time-domain resource, and then sends the sensing signal by using the transmit parameter on the second time-domain resource, which is capable of adaptively adjusting the transmit parameter in the process of alternately sending and receiving to maintain continuous sensing of the sensing target, not only solving the problem of continuously sensing a moving target under the bistatic sensing manner, but also avoiding signaling interaction and saving signaling overhead.

In some embodiments, determining the transmission parameter based on the first sensing signal received on the first time-domain resource includes:
determining sensing data associated with the sensing target based on the first sensing signal received on the first time-domain resource; and
determining the transmission parameter based on the sensing data associated with the sensing target.

Specifically, in this embodiment, in case of determining the transmission parameter, the sensing device first determines the sensing data associated with the sensing target based on the received sensing signal, and then determines the transmission parameter based on the sensing data.

In some embodiments, the sensing data associated with the sensing target includes one or more of the following: a speed of the sensing target, a distance from the sensing target (to the sensing device determining the transmission parameter), a direction of the sensing target, a position of the sensing target, a sensing measurement quantity associated with the sensing target, a speed offset of the sensing target, a distance offset of the sensing target, a direction offset of the sensing target, a sensing measurement quantity offset of the sensing target, a speed range of the sensing target, a distance range of the sensing target, and a direction range of the sensing target.

In some embodiments, the sensing measurement quantity includes one or more of delay, Doppler shift, angle of arrival, sensing signal receive strength, or channel state information.

For example, after receiving the sensing signal on the first time-domain resource, the sensing device first determines the position of the sensing target according to the received sensing signal, and then determines a send beam direction according to the position of the sensing target, where the send beam direction may be a direction aimed at the position of the sensing target.

In some embodiments, the transmission parameter further includes a receive parameter for receiving the sensing signal, and the alternately sending and receiving the sensing signal with the peer device further includes:
receiving the sensing signal from the peer device by using the receive parameter on a third time-domain resource.

Specifically, the third time-domain resource is after the second time-domain resource. After receiving the sensing signal sent from the peer device on the first time-domain resource, the sensing device may determine the transmit parameter and the receive parameter based on the sensing signal received on the first time-domain resource, send the sensing signal by using the transmit parameter on the second time-domain resource, and receive the sensing signal sent from the peer device by using the receive parameter on the third time-domain resource.

The third time-domain resource may include a time-domain resource used for one or more transmissions of the sensing signal. In case that the third time-domain resource includes a time-domain resource used for transmitting the sensing signals multiple times, the peer device sends the sensing signals multiple times on the third time-domain resource, and the sensing device receives the sensing signals sent from the peer device multiple times on the third time-domain resource. The example of the third time-domain resource including a time-domain resource used for transmitting the sensing signals multiple times may refer to what is described previously, and details are not repeatedly described herein.

The peer device may determine a transmission parameter (including a transmit parameter and a receive parameter) based on the sensing signal received on the second time-domain resource, and then send the sensing signal by using the transmit parameter on the third time-domain resource, and use the determined receive parameter while receiving a next or a next group of sensing signals. The sensing device and the peer device alternately send and receive sensing signals, and both the sensing device and the peer device may adaptively adjust transmit parameters and receive parameters, thereby maintaining continuous sensing of the sensing target.

In some embodiments, the receive parameter includes a receive beam parameter. The receive beam parameter may include at least one of the following: a receive beam direction and a receive beam width.

By the bistatic sensing method according to the embodiments of the present application, after receiving the sensing signal from the peer device on the first time-domain resource, the sensing device determines the transmit parameter and the receive parameter based on the sensing signal received on the first time-domain resource, and then sends the sensing signal by using the transmit parameter on the second time-domain resource, and receives the sensing signal by using the receive parameter on the third time-domain resource, which is capable of adaptively adjusting the transmit parameter and the receive parameter in the process of alternately sending and receiving to maintain continuous sensing of the sensing target, not only solving the problem of continuously sensing a moving target under the bistatic sensing manner, but also avoiding signaling interaction and saving signaling overhead.

In some embodiments, alternately sending and receiving the sensing signal with a peer device further includes:
receiving the sensing signal from the peer device on a third time-domain resource.

Specifically, the third time-domain resource is after the second time-domain resource. After receiving the sensing signal sent from the peer device on the first time-domain resource, the sensing device may determine the transmit parameter based on the sensing signal received on the first time-domain resource, send the sensing signal by using the transmit parameter on the second time-domain resource, and then receive the sensing signal sent from the peer device on the third time-domain resource. In case of receiving the sensing signal sent from the peer device on the third time-domain resource, the used receive parameter is not limited herein. For example, it may be a receive parameter determined based on the sensing signal received on the first time-domain resource, or may be a receive parameter determined through other manners without relying on the received sensing signal.

The third time-domain resource may include a time-domain resource used for one or more transmissions of the sensing signal. In case that the third time-domain resource includes a time-domain resource used for transmitting the sensing signals multiple times, the peer device sends the sensing signals multiple times on the third time-domain resource, and the sensing device receives the sensing signals sent from the peer device multiple times on the third time-domain resource. The example of the third time-domain resource including a time-domain resource used for transmitting the sensing signals multiple times may refer to what is described previously, and details are not repeatedly described herein.

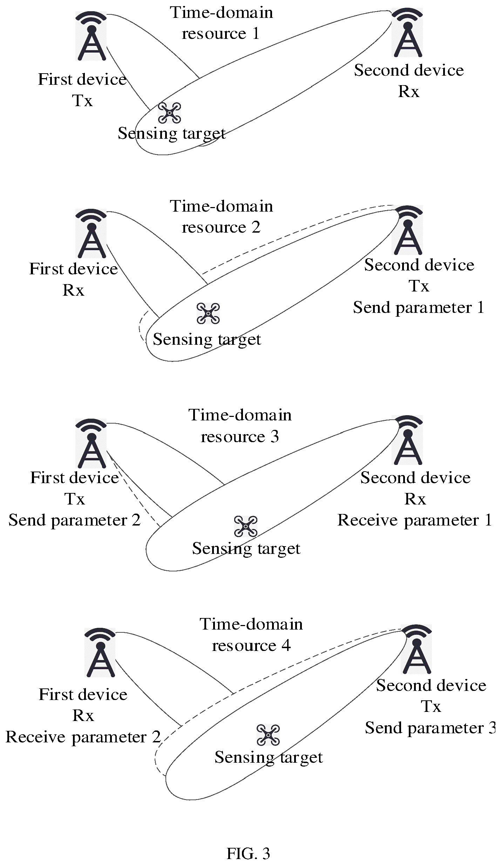

Fig. 3 is an exemplary diagram of a bistatic sensing process according to an embodiment of the present application. Referring to Fig. 3, in this example, the first device sends a sensing signal (Tx) on a time-domain resource 1, correspondingly, the second device receives the sensing signal (Rx) on the time-domain resource 1, and the second device determines a transmission parameter including a transmit parameter 1 and a receive parameter 1 according to the sensing signal received on the time-domain resource 1. In some implementations, before sending the sensing signal on the time-domain resource 1, the first device may discover a sensing target through manners such as beam scanning, determine the position of the sensing target, and then initiate tracking of the sensing target, that is, the process of alternately sending and receiving initiates from the time-domain resource 1.

Subsequently, the second device uses the transmit parameter 1 to send the sensing signal on a time-domain resource 2, correspondingly, the first device receives the sensing signal on the time-domain resource 2, and the first device determines a transmission parameter including a transmit parameter 2 and a receive parameter 2 according to the sensing signal received on the time-domain resource 2.

Subsequently, the first device uses the transmit parameter 2 to send the sensing signal on a time-domain resource 3. At this time, the second device receives the sensing signal on the time-domain resource 3 according to the previously determined receive parameter 1. Then, the second device determines a transmission parameter including a transmit parameter 3 and a receive parameter 3 according to the sensing signal received on the time-domain resource 3. The second device uses the transmit parameter 3 to send the sensing signal on a time-domain resource 4, and the first device receives the sensing signal on the time-domain resource 4 according to the previously determined receive parameter 2. By continuously sending and receiving sensing signals alternately between the sensing devices, the purpose of continuously tracking the sensing target is achieved.

In the present application, the first time-domain resource, the second time-domain resource, and the third time-domain resource are merely different time-domain resources in a chronological order, and the present application does not limit specific time-domain positions of these time-domain resources. For example, referring to Fig. 3, any of the time-domain resource 1, the time-domain resource 2, the time-domain resource 3, or the time-domain resource 4 in Fig. 3 may be the first time-domain resource, and correspondingly, its subsequent time-domain resources are the second time-domain resource and the third time-domain resource.

For example, the second device receives the sensing signal on the time-domain resource 1. For the second device, the time-domain resource 1 is the first time-domain resource, and the time-domain resource 2 and the time-domain resource 3 are respectively the second time-domain resource and the third time-domain resource. For example, the second device receives the sensing signal on the time-domain resource 3. For the second device, the time-domain resource 3 may also be considered as the first time-domain resource, the time-domain resource 4 is the second time-domain resource, and a time-domain resource used for sending the sensing signal after the time-domain resource 4 is the third time-domain resource.

For example, the first device receives the sensing signal on the time-domain resource 2. For the first device, the time-domain resource 2 is the first time-domain resource, the time-domain resource 3 is the second time-domain resource, and the time-domain resource 4 is the third time-domain resource. For example, the first device receives the sensing signal on the time-domain resource 4. For the first device, the time-domain resource 4 may also be considered as the first time-domain resource, and time-domain resources used for sending sensing signals after the time-domain resource 4 are sequentially the second time-domain resource and the third time-domain resource.

In some implementations, in case of receiving the sensing signal for the first time, the sensing device may determine the receive parameter (e.g., the receive beam direction) based on the position of an initial sensing target. For example, referring to Fig. 3, on the time-domain resource 2, the first device may determine the receive beam direction based on the position of the initial sensing target.

Since there is a time interval between the received sensing signal used for determining the transmission parameter and the next or the next group of sensing signals to be transmitted, the position of the sensing target may have changed during this period of time. In some implementations, using a wider send beam and/or a wider receive beam may be considered, and combining a historical trajectory to predict the send beam direction and/or the receive beam direction may also be considered, thereby being capable of more accurately sending and/or receiving the sensing signal, maintaining continuous sensing of the sensing target.

In some embodiments, the method further includes:
receiving time-domain resource indication information; and
determining a time-domain resource used for sending the first sensing signal and/or a time-domain resource used for receiving the first sensing signal based on the time-domain resource indication information, where the time-domain resource used for receiving the sensing signal includes the first time-domain resource, and the time-domain resource used for sending the second sensing signal includes the second time-domain resource.

In some embodiments, the method further includes:
receiving time-domain resource indication information; and
determining a time-domain resource used for sending the sensing signal and/or a time-domain resource used for receiving the sensing signal based on the time-domain resource indication information, where the time-domain resource used for receiving the sensing signal includes the first time-domain resource and/or the third time-domain resource, and the time-domain resource used for sending the sensing signal includes the second time-domain resource.

Specifically, the sensing device may receive the time-domain resource indication information sent from other devices. Based on the time-domain resource indication information, the time-domain resource used for sending the sensing signal and/or the time-domain resource used for receiving the sensing signal may be determined, for example, the first time-domain resource, the second time-domain resource, the third time-domain resource, etc.

The other device may be the peer device, or may be a device other than both the sensing device and the peer device.

For example, the first device receives the time-domain resource indication information sent from the second device or a device other than the first device and the second device. Alternatively, the second device receives the time-domain resource indication information sent from the first device or a device other than the first device and the second device.

In some embodiments, after receiving the time-domain resource indication information sent from a device other than the first device and the second device, the second device may send the time-domain resource indication information to the first device. The case of the first device is similar, which is not repeatedly described herein.

In some embodiments, the time-domain resource indication information is a radio resource control (RRC) message, an RRC information element (IE), a medium access control control element (MAC CE), or physical layer indication information.

It should be noted that, in the present application, the names of various indication information (such as time-domain resource indication information, first time-domain resource indication information, second time-domain resource indication information, third time-domain resource indication information, first indication information, second indication information, third indication information, fourth indication information, etc.) do not limit their functions and contents, but are merely named differently for the purpose of convenient description and easy distinction, but do not constitute a limitation on the functions or contents of the indication information.

In some embodiments, the time-domain resource indication information includes first time-domain resource indication information, where the first time-domain resource indication information is used for indicating the time-domain resource used for sending the sensing signal and/or the time-domain resource used for receiving the sensing signal.

In some implementations, the time-domain resource used for transmitting the sensing signal may be indicated to the sensing device through a manner of semi-static configuration.

For example, referring to Fig. 3, taking the four time-domain resources in Fig. 3 as an example, the first device receives first time-domain resource indication information 1, and the first device determines a time-domain resource 1 and a time-domain resource 3 used for sending the sensing signal, and a time-domain resource 2 and a time-domain resource 4 used for receiving the sensing signal according to the first time-domain resource indication information 1. And/or, the second device receives first time-domain resource indication information 2, and the second device determines the time-domain resource 2 and the time-domain resource 4 used for sending the sensing signal, and the time-domain resource 1 and the time-domain resource 3 used for receiving the sensing signal according to the first time-domain resource indication information 2. Afterwards, the first device and the second device initiate to alternately send and receive sensing signals on the time-domain resource 1, the time-domain resource 2, the time-domain resource 3, and the time-domain resource 4. It should be understood that, although the first time-domain resource indication information received by the first device (the first time-domain resource indication information 1) and the first time-domain resource indication information received by the second device (the first time-domain resource indication information 2) are both used for indicating the time-domain resource used for sending the sensing signal and/or the time-domain resource used for receiving the sensing signal, they are not necessarily the same indication information.

In some embodiments, the time-domain resource indication information includes a resource configuration or a resource identifier of the indicated time-domain resource.

In some implementations, in case of indicating the time-domain resource through the resource identifier, the sensing device obtains the resource configuration of the time-domain resources with the corresponding resource identifier through other manners (e.g., receiving other indication information).

For example, the first device receives the first time-domain resource indication information, and the first time-domain resource indication information indicates the resource configuration of time-domain resources used for sending the sensing signal (such as the time-domain resource 1 and the time-domain resource 3), and indicates the resource configuration of time-domain resources used for receiving the sensing signal (such as the time-domain resource 2 and the time-domain resource 4).

In some implementations, the first time-domain resource indication information is SensingResourceConfig. ResourceElement indicates configuration information of the time-domain resources, txResourceList indicates the time-domain resources used for sending the sensing signal, including one or more ResourceElements, and rxResourceList indicates the time-domain resources used for receiving the sensing signal, including one or more ResourceElements. An exemplary information structure is as follows:

```
    SensingResourceConfig ::= SEQUENCE {
      txResourceList SEQUENCE (SIZE (1..X)) OF ResourceElement,
      rxResourceList SEQUENCE (SIZE (1..Y)) OF ResourceElement
    }
```

For another example, the first device receives the first time-domain resource indication information, and the first time-domain resource indication information indicates, through a resource identifier, that the time-domain resource 1 and the time-domain resource 3 are time-domain resources used for sending the sensing signal, and/or indicates that the time-domain resource 2 and the time-domain resource 4 are time-domain resources used for receiving the sensing signal. The first time-domain resource indication information indicates a resource identifier of the time-domain resources used for sending the sensing signal (such as the time-domain resource 1 and the time-domain resource 3), and/or indicates a resource identifier of the time-domain resources used for receiving the sensing signal (such as the time-domain resource 2 and the time-domain resource 4). In this case, the first device further needs to receive resource configuration information indicating the time-domain resource 1, the time-domain resource 2, the time-domain resource 3, and the time-domain resource 4.

In some implementations, the first time-domain resource indication information is SensingResourceConfig. ResourceElementId is an identifier indicating the time-domain resource, txResourceList indicates the time-domain resource used for sending the sensing signal, including one or more ResourceElementIds, and rxResourceList indicates the time-domain resource used for receiving the sensing signal, including one or more ResourceElementIds. An exemplary information structure is as follows:

```
    SensingResourceConfig ::= SEQUENCE {
      txResourceList SEQUENCE (SIZE (1..X)) OF ResourceElementId,
      rxResourceList SEQUENCE (SIZE (1..Y)) OF ResourceElementId
    }
```

In some embodiments, the time-domain resource indication information includes second time-domain resource indication information and/or third time-domain resource indication information, where the second time-domain resource indication information is used for indicating a next or a next group of time-domain resources used for receiving the sensing signal, and the third time-domain resource indication information is used for indicating a next or a next group of time-domain resources used for sending the sensing signal.

In some implementations, the time-domain resource used for transmitting the sensing signals may be indicated to the sensing device through a manner of dynamic configuration. The sensing device receives the time-domain resource indication information prior to the time-domain resource indicated by the time-domain resource indication information.

For example, the sensing device (taking the second device as an example, its peer device is the first device) receives second time-domain resource indication information 1, the second time-domain resource indication information 1 indicates a first time-domain resource used for the second device to receive the sensing signal (i.e., a next or a next group of time-domain resources used for receiving the sensing signal, where the "next group" refers to a case where the first time-domain resource includes a time-domain resource used for receiving the sensing signals multiple times), and the second device receives the sensing signal sent from the first device on the first time-domain resource; then, the second device receives third time-domain resource indication information 1, the third time-domain resource indication information 1 indicates a second time-domain resource used for the second device to send the sensing signal (i.e., a next or a next group of time-domain resources used for sending the sensing signal, where the "next group" refers to a case where the second time-domain resource includes a time-domain resource used for sending the sensing signals multiple times), and the second device sends the sensing signal on the second time-domain resource; then, the second device receives second time-domain resource indication information 2, the second time-domain resource indication information 2 indicates a third time-domain resource used for the second device to receive the sensing signal (i.e., a next or a next group of time-domain resources used for receiving the sensing signal, where the "next group" refers to a case where the third time-domain resource includes a time-domain resource used for receiving the sensing signals multiple times), and the second device receives the sensing signal sent from the first device on the third time-domain resource.

For another example, for the peer device of the sensing device (still taking the sensing device being the second device as an example, its peer device is the first device), the first device receives third time-domain resource indication information 2, the third time-domain resource indication information 2 indicates a first time-domain resource used for the first device to send the sensing signal (i.e., a next or a next group of time-domain resources used for sending the sensing signal, where the "next group" refers to a case where the first time-domain resource includes a time-domain resource used for sending the sensing signals multiple times), and the first device sends the sensing signal on the first time-domain resource; then, the first device receives second time-domain resource indication information 3, the second time-domain resource indication information 3 indicates a second time-domain resource used for the first device to receive the sensing signal (i.e., a next or a next group of time-domain resources used for receiving the sensing signal, where the "next group" refers to a case where the second time-domain resource includes a time-domain resource used for receiving the sensing signals multiple times), and the first device receives the sensing signal sent from the second device on the second time-domain resource; then, the first device receives third time-domain resource indication information 3, the third time-domain resource indication information 3 indicates a third time-domain resource used for sending the sensing signal (i.e., a next or a next group of time-domain resources used for sending the sensing signal, where the "next group" refers to a case where the third time-domain resource includes a time-domain resource used for sending the sensing signals multiple times), and the first device sends the sensing signal on the third time-domain resource.

In some implementations, for the case where the time-domain resource indication information includes the second time-domain resource indication information and the third time-domain resource indication information, the sensing device may receive the second time-domain resource indication information and the third time-domain resource indication information through two receptions. It may also be understood that the second time-domain resource indication information and the third time-domain resource indication information are sent through two messages.

For example, referring to Fig. 3, taking the four time-domain resources in Fig. 3 as an example, the first device receives indication information 1, determines that the time-domain resource 1 is used for sending the sensing signal according to the indication information 1, and the first device sends the sensing signal on the time-domain resource 1; then, the first device receives indication information 2, determines that the time-domain resource 2 is used for receiving the sensing signal according to the indication information 2, and the first device receives the sensing signal on the time-domain resource 2; then, the first device receives indication information 3, determines that the time-domain resource 3 is used for sending the sensing signal according to the indication information 3, and the first device sends the sensing signal on the time-domain resource 3; then, the first device receives indication information 4, determines that the time-domain resource 4 is used for receiving the sensing signal according to the indication information 4, and the first device receives the sensing signal on the time-domain resource 4. The above indication information 2 and indication information 4 both belong to the second time-domain resource indication information, and the above indication information 1 and indication information 3 both belong to the third time-domain resource indication information. Through dynamic configuration of time-domain resources in the process of the two sensing devices alternately sending and receiving sensing signals, the time-domain resource configuration is more flexible. The case of the second device is similar, which is not repeatedly described herein.

In some embodiments, the time-domain resource indication information includes a resource configuration or a resource identifier of the indicated time-domain resource.

In some implementations, in case of indicating the time-domain resource through the resource identifier, the sensing device obtains the resource configuration of the time-domain resource with the corresponding resource identifier through other manners (e.g., receiving other indication information).

For example, the first device receives the second time-domain resource indication information, and the second time-domain resource indication information indicates a resource configuration of the time-domain resource used for receiving the sensing signal (such as the time-domain resource 2).

For another example, the first device receives the second time-domain resource indication information, and the second time-domain resource indication information indicates, through a resource identifier, that the time-domain resource 2 is a time-domain resource used for receiving the sensing signal. The second time-domain resource indication information indicates a resource identifier of the time-domain resource used for receiving the sensing signal (such as the time-domain resource 2). In this case, the first device further needs to receive resource configuration information indicating the time-domain resource 2.

For another example, the first device receives the third time-domain resource indication information, and the third time-domain resource indication information indicates a resource configuration of the time-domain resource used for sending the sensing signal (such as the time-domain resource 3).

For another example, the first device receives the third time-domain resource indication information, and the third time-domain resource indication information indicates, through a resource identifier, that the time-domain resource 3 is a time-domain resource used for sending the sensing signal. The third time-domain resource indication information indicates a resource identifier of the time-domain resource used for sending the sensing signal (such as the time-domain resource 3). In this case, the first device further needs to receive resource configuration information indicating the time-domain resource 3.

In some embodiments, the next or the next group of time-domain resources used for receiving the sensing signal is one or more time-domain resources after a first duration from a sending moment (which may be a sending initiating moment or a sending terminating moment, the present application is not limited thereto) of the second time-domain resource indication information. The one or more time-domain resources here may be any time-domain resources, or time-domain resources capable of receiving signals, or time-domain resources capable of receiving sensing signals.

The next or the next group of time-domain resources used for sending the sensing signal is one or more time-domain resources after a second duration from a sending moment (which may be a sending initiating moment or a sending terminating moment, the present application is not limited thereto) of the third time-domain resource indication information. The one or more time-domain resources here may be any time-domain resources, or time-domain resources capable of sending signals, or time-domain resources capable of sending sensing signals.

Specifically, the first duration and the second duration may be arbitrary durations, which are not specifically limited. The first duration and the second duration may be identical, or may also be different.

For example, the sensing device receives the second time-domain resource indication information, and determines the earliest one or more time-domain resources after a time interval T1 from the sending moment of the second time-domain resource indication information as the next or the next group of time-domain resources used for receiving the sensing signal, where T1 represents the first duration, and T1 is greater than or equal to 0.

For another example, after receiving the second time-domain resource indication information, the sensing device determines one or more time-domain resources after a time interval T1 from the sending moment of the second time-domain resource indication information, where the one or more time-domain resources may all be used for the sensing device to receive the sensing signal, until a next piece of third time-domain resource indication information indicates a time-domain resource used for the sensing device to send the sensing signal. Taking the indication information 2 and the indication information 3 exemplified previously as an example, in some implementations, after receiving the indication information 2, the sensing device determines one or more time-domain resources initiating after the time interval T1 from the sending moment of the indication information 2 until the time interval T1 from the sending moment of the indication information 3 as time-domain resources used for the first device to receive the sensing signal.

For another example, the sensing device receives the third time-domain resource indication information, and determines the earliest one or more time-domain resources after a time interval T2 from the sending moment of the third time-domain resource indication information as the next or the next group of time-domain resources used for sending the sensing signal, where T2 represents the second duration, and T2 is greater than or equal to 0.

For another example, after receiving the third time-domain resource indication information, the sensing device determines one or more time-domain resources after a time interval T2 from the sending moment of the third time-domain resource indication information, where the one or more time-domain resources may all be used for the sensing device to send the sensing signal, until a next piece of second time-domain resource indication information indicates a time-domain resource used for the sensing device to receive the sensing signal. Taking the indication information 1 and the indication information 2 exemplified previously as an example, in some implementations, after receiving the indication information 1, the sensing device determines one or more time-domain resources initiating after the time interval T2 from the sending moment of the indication information 1 until the time interval T2 from the sending moment of the indication information 2 as time-domain resources used for the first device to send the sensing signal.

In some embodiments, the method further includes:
initiating or terminating the process of alternately sending and receiving a sensing signal with the peer device based on a speed of the sensing target and/or sensing performance.

Specifically, in this embodiment, an initiating or terminating condition for alternately sending and receiving may be set, and the sensing device may decide to initiate or terminate the process of alternately sending and receiving based on the speed of the sensing target and/or the sensing performance (e.g., sensing signal receive power).

In some embodiments, initiating or terminating the process of alternately sending and receiving the sensing signal with the peer device based on the speed of the sensing target and/or sensing performance includes:
initiating the process of alternately sending and receiving the sensing signal with the peer device in case that a first condition is met; where
the first condition includes one or more of the following:
   a speed of the sensing target is lower than or equal to a first threshold; or
   a sensing signal receive power is higher than or equal to a second threshold.

For example, in case that the speed of the sensing target satisfies a first criterion, the method of alternately sending and receiving a sensing signal by the first device and the second device may be used. The speed of the sensing target satisfying the first criterion may specifically be: the speed of the sensing target is lower than or equal to the first threshold.

For another example, in case that the sensing performance satisfies a second criterion, the method of alternately sending and receiving a sensing signal by the first device and the second device may be used. The sensing performance satisfying the second criterion may specifically be: the sensing signal receive power is higher than or equal to the second threshold.

The first threshold and the second threshold are any threshold and may be flexibly set, which are not specifically limited.

In some embodiments, initiating or terminating the process of alternately sending and receiving the sensing signal with the peer device based on the speed of the sensing target and/or the sensing performance includes:
terminating the process of alternately sending and receiving the sensing signal with the peer device in case that a second condition is met; where
the second condition includes one or more of the following:
   a speed of the sensing target is higher than or equal to a third threshold; or
   a sensing signal receive power is lower than or equal to a fourth threshold.

For example, in case that the speed of the sensing target satisfies a third criterion, using the method of alternately sending and receiving a sensing signal by the first device and the second device may be terminated. The speed of the sensing target satisfying the third criterion may specifically be: the speed of the sensing target is higher than or equal to the third threshold.

For another example, in case that the sensing performance satisfies a fourth criterion, using the method of alternately sending and receiving a sensing signal by the first device and the second device may be terminated. The sensing performance satisfying the fourth criterion may specifically be: the sensing signal receive power is lower than or equal to the fourth threshold.

The third threshold and the fourth threshold are any thresholds and may be flexibly set, which are not specifically limited.

In some embodiments, the method further includes:
sending first indication information to the peer device, where the first indication information is used for indicating initiating or terminating the process of alternately sending and receiving the sensing signal.

For example, the first device determines initiating or terminating the process of alternately sending and receiving the sensing signal based on the speed of the sensing target and/or the sensing performance, and the first device may send the first indication information to the second device, to indicate the second device to initiate or terminate alternately sending and receiving the sensing signal. The case of the second device is similar, which is not repeatedly described herein.

In some embodiments, the method further includes:
receiving second indication information sent from the peer device; and
initiating or terminating the process of alternately sending and receiving the sensing signal with the peer device based on the second indication information.

For example, the second device determines initiating or terminating the process of alternately sending and receiving the sensing signal based on the speed of the sensing target and/or the sensing performance, the second device sends the second indication information to the first device, and the first device initiates or terminates the process of alternately sending and receiving the sensing signal according to the second indication information.

In some embodiments, the method further includes:
receiving third indication information sent from the peer device, where the third indication information is used for indicating sensing data associated with the sensing target and/or parameter information associated with the transmission parameter; and
determining a transmission parameter used for transmitting a next or a next group of sensing signals based on the third indication information.

Specifically, in order to prevent the sensing manner of alternately sending and receiving the sensing signal from not being able to well sense the target in some cases, signaling may be used to assist in adjusting the transmission parameter.

In some implementations, the parameter information associated with the transmission parameter may be information of the transmission parameter itself, that is, the third indication information indicates the transmission parameter used for transmitting the sensing signal.

In some implementations, the parameter information associated with the transmission parameter may be information of an associated parameter used for determining the transmission parameter (such as an offset of the transmission parameter, a value range of the transmission parameter, etc.).

In some embodiments, the method further includes:
sending fourth indication information to the peer device, where the fourth indication information is used for indicating the sensing data associated with the sensing target and/or the parameter information associated with the transmission parameter.

Specifically, assisting in adjusting the transmission parameter through signaling may be that any of the sensing devices sends indication information to the peer device. For example, the first device sends the fourth indication information to the second device, the fourth indication information is used for indicating the sensing data associated with the sensing target and/or the parameter information associated with the transmission parameter, and the second device determines a transmission parameter used for transmitting a next or a next group of sensing signals according to the fourth indication information.

In some embodiments, sending the fourth indication information to the peer device includes:
sending the fourth indication information to the peer device in case that a third condition is met; where
the third condition includes one or more of the following:
   a speed of the sensing target is higher than or equal to a fifth threshold; or
   a sensing signal receive power is lower than or equal to a sixth threshold.

For example, the first device may send the fourth indication information to the second device in case that the speed of the sensing target satisfies a fifth criterion. The speed of the sensing target satisfying the fifth criterion may specifically be: the speed of the sensing target is higher than or equal to the fifth threshold.

For another example, the first device may send the fourth indication information to the second device in case that the sensing performance satisfies a sixth criterion. The sensing performance satisfying the sixth criterion may specifically be: the sensing signal receive power is lower than or equal to the sixth threshold.

The fifth threshold and the sixth threshold are any thresholds and may be flexibly set, which are not specifically limited.

The methods according to the above various embodiments of the present application are exemplified below through examples of specific application scenarios in combination with Fig. 3.

Example 1: The first device and the second device alternately send and receive sensing signals used for sensing a same one or more sensing targets. Its main process includes:
1. The first device sends a sensing signal on a time-domain resource 1; the second device receives the sensing signal on the time-domain resource 1; and sending or receiving the sensing signal on the time-domain resource 1 is used for sensing the sensing target.

In some implementations, the second device determines a transmit parameter 1 according to the sensing signal received on the time-domain resource 1.

In some implementations, the second device determines a receive parameter 1 according to the sensing signal received on the time-domain resource 1.

2. The second device sends the sensing signal by using the transmit parameter 1 on a time-domain resource 2; the first device receives the sensing signal on the time-domain resource 2; and sending or receiving the sensing signal on the time-domain resource 2 is used for sensing the sensing target.

In some implementations, the first device determines a transmit parameter 2 according to the sensing signal received on the time-domain resource 2.

In some implementations, the first device determines a receive parameter 2 according to the sensing signal received on the time-domain resource 2.

In some implementations, the time-domain resource 2 may include a time-domain resource used for sending or receiving the sensing signal one or more times. The transmit parameter 1 may include a parameter used for sending the sensing signal one or more times. In case that the time-domain resource 2 includes a time-domain resource used for sending the sensing signals multiple times, the transmit parameter 1 of sending the sensing signals multiple times may be identical, or somewhat different.

3. The first device sends the sensing signal by using the transmit parameter 2 on a time-domain resource 3; the second device receives the sensing signal on the time-domain resource 3; and sending or receiving the sensing signal on the time-domain resource 3 is used for sensing the sensing target.

In some implementations, the second device receives the sensing signal by using the receive parameter 1 on the time-domain resource 3.

In some implementations, the second device determines a transmit parameter 3 according to the sensing signal received on the time-domain resource 3.

In some implementations, the second device determines a receive parameter 3 according to the sensing signal received on the time-domain resource 3.

In some implementations, the time-domain resource 3 may include a time-domain resource used for sending or receiving the sensing signal one or more times. The receive parameter 1 may include a parameter used for receiving the sensing signal one or more times. In case that the time-domain resource 3 includes a time-domain resource used for receiving the sensing signals multiple times, the receive parameter 1 of receiving the sensing signals multiple times may be identical, or somewhat different.

4. The second device sends the sensing signal by using the transmit parameter 3 on a time-domain resource 4; the first device receives the sensing signal on the time-domain resource 4; and sending or receiving the sensing signal on the time-domain resource 4 is used for sensing the sensing target.

In some implementations, the first device receives the sensing signal by using the receive parameter 2 on the time-domain resource 4.

In some implementations, the time-domain resource 4 may include a time-domain resource used for sending or receiving the sensing signal one or more times. The receive parameter 2 may include a parameter used for receiving the sensing signal one or more times. In case that the time-domain resource 4 includes a time-domain resource used for receiving the sensing signals multiple times, the receive parameter 2 of receiving the sensing signals multiple times may be identical, or somewhat different.

Example 2: The time-domain resources for sending and receiving the sensing signal are determined according to semi-static configuration. Its main process includes:
1. The first device receives first time-domain resource indication information 1, and the first device determines that a time-domain resource 1 and a time-domain resource 3 are used for sending the sensing signal, and a time-domain resource 2 and a time-domain resource 4 are used for receiving the sensing signal according to the first time-domain resource indication information 1. And/or, the second device receives first time-domain resource indication information 2, and the second device determines that the time-domain resource 2 and the time-domain resource 4 are used for sending the sensing signal, and the time-domain resource 1 and the time-domain resource 3 are used for receiving the sensing signal according to the first time-domain resource indication information 2.
2. The first device sends the sensing signal on the time-domain resource 1; the second device receives the sensing signal on the time-domain resource 1; and sending or receiving the sensing signal on the time-domain resource 1 is used for sensing the sensing target.

In some implementations, the second device determines a transmit parameter 1 according to the sensing signal received on the time-domain resource 1.

In some implementations, the second device determines a receive parameter 1 according to the sensing signal received on the time-domain resource 1.

3. The second device sends the sensing signal by using the transmit parameter 1 on the time-domain resource 2; the first device receives the sensing signal on the time-domain resource 2; and sending or receiving the sensing signal on the time-domain resource 2 is used for sensing the sensing target.

In some implementations, the first device determines a transmit parameter 2 according to the sensing signal received on the time-domain resource 2.

In some implementations, the first device determines a receive parameter 2 according to the sensing signal received on the time-domain resource 2.

4. The first device sends the sensing signal by using the transmit parameter 2 on the time-domain resource 3; the second device receives the sensing signal on the time-domain resource 3; and sending or receiving the sensing signal on the time-domain resource 3 is used for sensing the sensing target.

In some implementations, the second device receives the sensing signal by using the receive parameter 1 on the time-domain resource 3.

In some implementations, the second device determines a transmit parameter 3 according to the sensing signal received on the time-domain resource 3.

In some implementations, the second device determines a receive parameter 3 according to the sensing signal received on the time-domain resource 3.

5. The second device sends the sensing signal by using the transmit parameter 3 on the time-domain resource 4; the first device receives the sensing signal on the time-domain resource 4; and sending or receiving the sensing signal on the time-domain resource 4 is used for sensing the sensing target.

In some implementations, the first device receives the sensing signal by using the receive parameter 2 on the time-domain resource 4.

Example 3: The time-domain resources for sending and receiving the sensing signal are determined according to dynamic configuration. Its main process includes:
1. The first device receives third time-domain resource indication information (indication information 1), and determines that a time-domain resource 1 is used for sending the sensing signal according to the indication information 1. And/or, the second device receives second time-domain resource indication information (indication information 5), and determines that the time-domain resource 1 is used for receiving the sensing signal according to the indication information 5.
2. The first device sends the sensing signal on the time-domain resource 1; the second device receives the sensing signal on the time-domain resource 1; and sending or receiving the sensing signal on the time-domain resource 1 is used for sensing the sensing target.

In some implementations, the second device determines a transmit parameter 1 according to the sensing signal received on the time-domain resource 1.

In some implementations, the second device determines a receive parameter 1 according to the sensing signal received on the time-domain resource 1.

3. The first device receives second time-domain resource indication information (indication information 2), and determines that a time-domain resource 2 is used for receiving the sensing signal according to the indication information 2. And/or, the second device receives third time-domain resource indication information (indication information 6), and determines that the time-domain resource 2 is used for sending the sensing signal according to the indication information 6.

4. The second device sends the sensing signal by using the transmit parameter 1 on the time-domain resource 2; the first device receives the sensing signal on the time-domain resource 2; and sending or receiving the sensing signal on the time-domain resource 2 is used for sensing the sensing target.

In some implementations, the first device determines a transmit parameter 2 according to the sensing signal received on the time-domain resource 2.

In some implementations, the first device determines a receive parameter 2 according to the sensing signal received on the time-domain resource 2.

5. The first device receives third time-domain resource indication information (indication information 3), and determines that a time-domain resource 3 is used for sending the sensing signal according to the indication information 3. And/or, the second device receives second time-domain resource indication information (indication information 7), and determines that the time-domain resource 3 is used for receiving the sensing signal according to the indication information 7.

6. The first device sends the sensing signal by using the transmit parameter 2 on the time-domain resource 3; the second device receives the sensing signal on the time-domain resource 3; and sending or receiving the sensing signal on the time-domain resource 3 is used for sensing the sensing target.

In some implementations, the second device receives the sensing signal by using the receive parameter 1 on the time-domain resource 3.

In some implementations, the second device determines a transmit parameter 3 according to the sensing signal received on the time-domain resource 3.

In some implementations, the second device determines a receive parameter 3 according to the sensing signal received on the time-domain resource 3.

7. The first device receives second time-domain resource indication information (indication information 4), and determines that a time-domain resource 4 is used for receiving the sensing signal according to the indication information 4. And/or, the second device receives third time-domain resource indication information (indication information 8), and determines that the time-domain resource 4 is used for sending the sensing signal according to the indication information 8.

8. The second device sends the sensing signal by using the transmit parameter 3 on the time-domain resource 4; the first device receives the sensing signal on the time-domain resource 4; and sending or receiving the sensing signal on the time-domain resource 4 is used for sensing the sensing target.

In some implementations, the first device receives the sensing signal by using the receive parameter 2 on the time-domain resource 4.

In some implementations, the indication information received by the first device or the second device may be sent from the peer device.

Example 4: Whether to initiate or terminate the process of alternately sending and receiving is determined. Its main process includes:

1. The first device or the second device determines that a criterion is met, and sends indication information to the peer device, the indication information being used for indicating initiating the process of alternately sending and receiving the sensing signal.

A specific method of the first device or the second device determining that the criterion is met may be initiating the process of alternately sending and receiving the sensing signal based on the speed of the sensing target and/or the sensing performance as described previously, which is not repeatedly described herein.

2. The first device sends the sensing signal on a time-domain resource 1; the second device receives the sensing signal on the time-domain resource 1; and sending or receiving the sensing signal on the time-domain resource 1 is used for sensing the sensing target.

In some implementations, the second device determines a transmit parameter 1 according to the sensing signal received on the time-domain resource 1.

In some implementations, the second device determines a receive parameter 1 according to the sensing signal received on the time-domain resource 1.

3. The second device sends the sensing signal by using the transmit parameter 1 on a time-domain resource 2; the first device receives the sensing signal on the time-domain resource 2; and sending or receiving the sensing signal on the time-domain resource 2 is used for sensing the sensing target.

In some implementations, the first device determines a transmit parameter 2 according to the sensing signal received on the time-domain resource 2.

In some implementations, the first device determines a receive parameter 2 according to the sensing signal received on the time-domain resource 2.

4. In some implementations, the first device determines that a criterion is met, and sends indication information to the second device, the indication information being used for indicating terminating the process of alternately sending and receiving a sensing signal.

A specific method of the first device determining that the criterion is met may be terminating the process of alternately sending and receiving the sensing signal based on the speed of the sensing target and/or the sensing performance as described previously, which is not repeatedly described herein.

Alternatively, 1. the first device or the second device determines that a criterion is met, and sends indication information to the peer device, the indication being used for indicating initiating the process of alternately sending and receiving a sensing signal.

A specific method of the first device or the second device determining that the criterion is met may be initiating the process of alternately sending and receiving the sensing signal based on the speed of the sensing target and/or the sensing performance as described previously, which is not repeatedly described herein.

2. The first device sends the sensing signal on a time-domain resource 1; the second device receives the sensing signal on the time-domain resource 1; and sending or receiving the sensing signal on the time-domain resource 1 is used for sensing the sensing target.

In some implementations, the second device determines a transmit parameter 1 according to the sensing signal received on the time-domain resource 1.

In some implementations, the second device determines a receive parameter 1 according to the sensing signal received on the time-domain resource 1.

3. The second device sends the sensing signal by using the transmit parameter 1 on a time-domain resource 2; the first device receives the sensing signal on the time-domain resource 2; and sending or receiving the sensing signal on the time-domain resource 2 is used for sensing the sensing target.

In some implementations, the first device determines a transmit parameter 2 according to the sensing signal received on the time-domain resource 2.

In some implementations, the first device determines a receive parameter 2 according to the sensing signal received on the time-domain resource 2.

4. The first device sends the sensing signal by using the transmit parameter 2 on a time-domain resource 3; the second device receives the sensing signal on the time-domain resource 3; and sending or receiving the sensing signal on the time-domain resource 3 is used for sensing the sensing target.

In some implementations, the second device receives the sensing signal by using the receive parameter 1 on the time-domain resource 3.

In some implementations, the second device determines a transmit parameter 3 according to the sensing signal received on the time-domain resource 3.

In some implementations, the second device determines a receive parameter 3 according to the sensing signal received on the time-domain resource 3.

5. In some implementations, the second device determines that a criterion is met, and sends indication information to the first device, the indication information being used for indicating terminating the process of alternately sending and receiving a sensing signal.

A specific method of the second device determining that the criterion is met may be terminating the process of alternately sending and receiving a sensing signal based on the speed of the sensing target and/or the sensing performance as described previously, which is not repeatedly described herein.

Example 5: The transmission parameter is auxiliary adjusted through signaling. Its main process includes:
1. The first device sends a sensing signal on a time-domain resource 1; the second device receives the sensing signal on the time-domain resource 1; and sending or receiving the sensing signal on the time-domain resource 1 is used for sensing the sensing target.

In some implementations, the second device determines a transmit parameter 1 according to the sensing signal received on the time-domain resource 1.

In some implementations, the second device determines a receive parameter 1 according to the sensing signal received on the time-domain resource 1.

2. The second device sends the sensing signal by using the transmit parameter 1 on a time-domain resource 2; the first device receives the sensing signal on the time-domain resource 2; and sending or receiving the sensing signal on the time-domain resource 2 is used for sensing the sensing target.

In some implementations, the first device determines a transmit parameter 2 according to the sensing signal received on the time-domain resource 2.

In some implementations, the first device determines a receive parameter 2 according to the sensing signal received on the time-domain resource 2.

3. The first device sends indication information to the second device, the indication information being used for indicating sensing data associated with the sensing target or parameter information associated with the transmission parameter; the second device receives the indication information, and determines a receive parameter 1' according to the indication information.

In some implementations, in case that the first device determines that a criterion is met, the first device sends the indication information to the second device.

4. The first device sends the sensing signal by using the transmit parameter 2 on a time-domain resource 3; the second device receives the sensing signal by using the receive parameter 1' on the time-domain resource 3; and sending or receiving the sensing signal on the time-domain resource 3 is used for sensing the sensing target.

In some implementations, the second device determines a transmit parameter 3 according to the sensing signal received on the time-domain resource 3.

In some implementations, the second device determines a receive parameter 3 according to the sensing signal received on the time-domain resource 3.

5. In some implementations, the second device sends indication information to the first device, the indication information being used for indicating sensing data associated with the sensing target or parameter information associated with the transmission parameter; the first device receives the indication information, and determines a receive parameter 2' according to the indication information.

In some implementations, in case that the second device determines that a criterion is met, the second device sends the indication information to the first device. A specific method for the second device to determine that the criterion is met may be as described previously: the second device determines that the third condition is met, which is not repeatedly described herein.

6. The second device sends the sensing signal by using the transmit parameter 3 on a time-domain resource 4; the first device receives the sensing signal by using the receive parameter 2' on the time-domain resource 4; and sending or receiving the sensing signal on the time-domain resource 4 is used for sensing the sensing target.

It should be noted that Example 1, Example 2, Example 3, Example 4, and Example 5 may be combined with each other. Each step in each example is not mandatory, and other steps may be included between steps. The steps in each example are not limited to being executed in the written order. Some steps in each example may be executed in parallel.

The methods and apparatuses according to various embodiments of the present application are based on the same application concept. Since principles of solving problems by the apparatuses and the methods are similar, implementations of the apparatuses and the methods may refer to each other, and repeated parts are not repeatedly described herein.

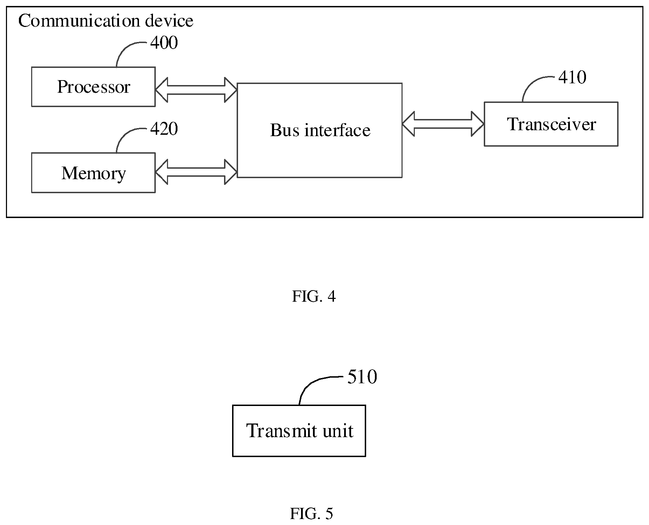

Fig. 4 is a schematic structural diagram of a communication device according to an embodiment of the present application. As shown in Fig. 4, the communication device includes a memory 420, a transceiver 410, and a processor 400, where the processor 400 and the memory 420 may also be arranged physically separated.

The memory 420 is used for storing a computer program; and the transceiver 410 is used for sending and receiving data under the control of the processor 400.

Specifically, the transceiver 410 is used for receiving and sending data under the control of the processor 400.

In Fig. 4, a bus architecture may include any number of interconnected buses and bridges. Specifically, various circuits representing one or more processors represented by the processor 400 and a memory represented by the memory 420 are linked together. The bus architecture may also link together various other circuits such as peripheral devices, voltage regulators, and power management circuits, etc., which are all well known in the art, and therefore, the present application will not further describe them. A bus interface provides an interface. The transceiver 410 may be multiple elements, i.e., including a transmitter and a receiver, providing units used for communicating with various other devices over transmit media, and these transmit media include transmit media such as wireless channels, wired channels, and optical cables.

The processor 400 is responsible for managing the bus architecture and general processing, and the memory 420 may store data used by the processor 400 in case of executing operations.

The processor 400 may be a central processing unit (CPU), an application specific integrated circuit (ASIC), a field-programmable gate array (FPGA), or a complex programmable logic device (CPLD), and the processor may also adopt a multi-core architecture.

The processor 400 is used for executing any of the methods according to the embodiments of the present application according to an obtained executable instruction by calling the computer program stored in the memory 420, for example: alternately sending and receiving a sensing signal with a peer device, to sense a sensing target; where alternately sending and receiving the sensing signal with the peer device includes: receiving a first sensing signal from the peer device on a first time-domain resource; determining a transmission parameter based on the first sensing signal received on the first time-domain resource, where the transmission parameter includes a transmit parameter for sending a second sensing signal; and sending the the sensing signal by using the transmit parameter on a second time-domain resource.

In some embodiments, determining the transmission parameter based on the first sensing signal received on the first time-domain resource includes:
determining sensing data associated with the sensing target based on the sensing signal received on the first time-domain resource; and
determining the transmission parameter based on the sensing data associated with the sensing target.

In some embodiments, the transmission parameter further includes a receive parameter for receiving the sensing signal, and alternately sending and receiving the sensing signal with the peer device further includes:
receiving the sensing signal from the peer device by using the receive parameter on a third time-domain resource.

In some embodiments, the method further includes:
receiving time-domain resource indication information; and
determining a time-domain resource used for sending the second sensing signal and/or a time-domain resource used for receiving the first sensing signal based on the time-domain resource indication information, where the time-domain resource used for receiving the first sensing signal includes the first time-domain resource, and the time-domain resource used for sending the second sensing signal includes the second time-domain resource.

In some embodiments, the method further includes:
receiving time-domain resource indication information; and
determining a time-domain resource used for sending the sensing signal and/or a time-domain resource used for receiving the sensing signal based on the time-domain resource indication information, where the time-domain resource used for receiving the sensing signal includes the first time-domain resource and/or the third time-domain resource, and the time-domain resource used for sending the sensing signal includes the second time-domain resource.

In some embodiments, the time-domain resource indication information includes first time-domain resource indication information, and the first time-domain resource indication information is used for indicating the time-domain resource used for sending the sensing signal and/or the time-domain resource used for receiving the sensing signal.

In some embodiments, the time-domain resource indication information includes second time-domain resource indication information and/or third time-domain resource indication information, the second time-domain resource indication information is used for indicating a next or a next group of time-domain resources used for receiving the sensing signal, and the third time-domain resource indication information is used for indicating a next or a next group of time-domain resources used for sending the sensing signal.

In some embodiments, the time-domain resource indication information includes a resource configuration or a resource identifier of the indicated time-domain resource.

In some embodiments, the next or the next group of time-domain resources used for receiving the sensing signal is one or more time-domain resources after a first duration from a sending moment of the second time-domain resource indication information, and the next or the next group of time-domain resources used for sending the sensing signal is one or more time-domain resources after a second duration from a sending moment of the third time-domain resource indication information.

In some embodiments, receiving the time-domain resource indication information includes:
receiving the time-domain resource indication information sent from the peer device.

In some embodiments, the method further includes:
initiating or terminating the process of alternately sending and receiving the sensing signal with the peer device based on a speed of the sensing target and/or sensing performance.

In some embodiments, initiating or terminating the process of alternately sending and receiving the sensing signal with the peer device based on the speed of the sensing target and/or the sensing performance includes:
initiating the process of alternately sending and receiving the sensing signal with the peer device in case that a first condition is met; where
the first condition includes one or more of the following:
   a speed of the sensing target is lower than or equal to a first threshold; or
   a sensing signal receive power is higher than or equal to a second threshold.

In some embodiments, initiating or terminating the process of alternately sending and receiving the sensing signal with the peer device based on the speed of the sensing target and/or the sensing performance includes:
ending alternately sending and receiving the sensing signal with the peer device in case that a second condition is met; where
the second condition includes one or more of the following:
   a speed of the sensing target is higher than or equal to a third threshold; or
   a sensing signal receive power is lower than or equal to a fourth threshold.

In some embodiments, the method further includes:
sending first indication information to the peer device, where the first indication information is used for indicating initiating or terminating the process of alternately sending and receiving the sensing signal.

In some embodiments, the method further includes:
receiving second indication information sent from the peer device; and
initiating or terminating the process of alternately sending and receiving the sensing signal with the peer device based on the second indication information.

In some embodiments, the method further includes:
receiving third indication information sent from the peer device, where the third indication information is used for indicating sensing data associated with the sensing target and/or parameter information associated with the transmission parameter; and
determining a transmission parameter used for transmitting a next or a next group of sensing signals based on the third indication information.

In some embodiments, the method further includes:
sending fourth indication information to the peer device, where the fourth indication information is used for indicating the sensing data associated with the sensing target and/or the parameter information associated with the transmission parameter.

In some embodiments, sending the fourth indication information to the peer device includes:
sending the fourth indication information to the peer device in case that a third condition is met; where
the third condition includes one or more of the following:
   a speed of the sensing target is higher than or equal to a fifth threshold; or
   a sensing signal receive power is lower than or equal to a sixth threshold.

In some embodiments, the time-domain resource indication information is a RRC message, an RRC Information Element, a MAC CE, or physical layer indication information.

In some embodiments, the transmit parameter includes one or more of a send beam parameter or a send power.

In some embodiments, the receive parameter includes a receive beam parameter.

In some embodiments, the sensing data associated with the sensing target includes one or more of the following:
a speed of the sensing target, a distance from the sensing target, a direction of the sensing target, a position of the sensing target, a sensing measurement quantity associated with the sensing target, a speed offset of the sensing target, a distance offset of the sensing target, a direction offset of the sensing target, a sensing measurement quantity offset of the sensing target, a speed range of the sensing target, a distance range of the sensing target, or a direction range of the sensing target.

It should be noted that, the above communication device according to the embodiments of the present application may implement all method steps implemented in the above method embodiments, and may achieve identical technical effects. Identical parts and beneficial effects of these embodiments and the method embodiments will not be specifically repeatedly described herein.

Fig. 5 is a schematic structural diagram of a bistatic sensing apparatus according to an embodiment of the present application. As shown in Fig. 5, the apparatus includes:
a transmit unit 500, configured to alternately send and receive a sensing signal with a peer device, to sense a sensing target; where
alternately sending and receiving the sensing signal with the peer device includes:
   receiving a first sensing signal from the peer device on a first time-domain resource;
   determining a transmission parameter based on the first sensing signal received on the first time-domain resource, where the transmission parameter includes a transmit parameter for sending a second sensing signal; and
   sending the second sensing signal by using the transmit parameter on a second time-domain resource.

In some embodiments, determining the transmission parameter based on the first sensing signal received on the first time-domain resource includes:
determining sensing data associated with the sensing target based on the first sensing signal received on the first time-domain resource; and
determining the transmission parameter based on the sensing data associated with the sensing target.

In some embodiments, the transmission parameter further includes a receive parameter for receiving a sensing signal, and alternately sending and receiving the sensing signal with the peer device further includes:
receiving the sensing signal from the peer device by using the receive parameter on a third time-domain resource.

In some embodiments, the apparatus further includes:
a first receiving unit, configured to receive time-domain resource indication information; and
a first determining unit, configured to determine a time-domain resource used for sending the second sensing signal and/or a time-domain resource used for receiving the first sensing signal based on the time-domain resource indication information, where the time-domain resource used for receiving the first sensing signal includes the first time-domain resource, and the time-domain resource used for sending the second sensing signal includes the second time-domain resource.

In some embodiments, the apparatus further includes:
a second receiving unit, configured to receive time-domain resource indication information; and
a second determining unit, configured to determine a time-domain resource used for sending the sensing signal and/or a time-domain resource used for receiving the sensing signal based on the time-domain resource indication information, where the time-domain resource used for receiving the sensing signal includes the first time-domain resource and/or the third time-domain resource, and the time-domain resource used for sending the sensing signal includes the second time-domain resource.

In some embodiments, the time-domain resource indication information includes first time-domain resource indication information, and the first time-domain resource indication information is used for indicating the time-domain resource used for sending the sensing signal and/or the time-domain resource used for receiving the sensing signal.

In some embodiments, the time-domain resource indication information includes second time-domain resource indication information and/or third time-domain resource indication information, the second time-domain resource indication information is used for indicating a next or a next group of time-domain resources used for receiving the sensing signal, and the third time-domain resource indication information is used for indicating a next or a next group of time-domain resources used for sending the sensing signal.

In some embodiments, the time-domain resource indication information includes a resource configuration or a resource identifier of the indicated time-domain resource.

In some embodiments, the next or the next group of time-domain resources used for receiving the sensing signal is one or more time-domain resources after a first duration from a sending moment of the second time-domain resource indication information, and the next or the next group of time-domain resources used for sending the sensing signal is one or more time-domain resources after a second duration from a sending moment of the third time-domain resource indication information.

In some embodiments, receiving the time-domain resource indication information includes:
receiving the time-domain resource indication information sent from the peer device.

In some embodiments, the apparatus further includes:
a first control unit, configured to initiate or terminate the process of alternately sending and receiving the sensing signal with the peer device based on the speed of the sensing target and/or the sensing performance.

In some embodiments, initiating or terminating the process of alternately sending and receiving the sensing signal with the peer device based on the speed of the sensing target and/or the sensing performance includes:
initiating the process of alternately sending and receiving the sensing signal with the peer device in case that a first condition is met; where
the first condition includes one or more of the following:
   a speed of the sensing target is lower than or equal to a first threshold; or
   a sensing signal receive power is higher than or equal to a second threshold.

In some embodiments, initiating or terminating the process of alternately sending and receiving the sensing signal with the peer device based on the speed of the sensing target and/or the sensing performance includes:
ending alternately sending and receiving the sensing signal with the peer device in case that a second condition is met; where
the second condition includes one or more of the following:
   a speed of the sensing target is higher than or equal to a third threshold; or
   a sensing signal receive power is lower than or equal to a fourth threshold.

In some embodiments, the apparatus further includes:
a first sending unit, configured to send first indication information to the peer device, where the first indication information is used for indicating initiating or terminating the process of alternately sending and receiving a sensing signal.

In some embodiments, the apparatus further includes:
a third receiving unit, configured to receive second indication information sent from the peer device; and
a second control unit, configured to initiate or terminate the process of alternately sending and receiving the sensing signal with the peer device based on the second indication information.

In some embodiments, the apparatus further includes:
a fourth receiving unit, configured to receive third indication information sent from the peer device, where the third indication information is used for indicating the sensing data associated with the sensing target and/or parameter information associated with the transmission parameter; and
a third determining unit, configured to determine a transmission parameter used for transmitting a next or a next group of sensing signals based on the third indication information.

In some embodiments, the apparatus further includes:
a second sending unit, configured to send fourth indication information to the peer device, where the fourth indication information is used for indicating the sensing data associated with the sensing target and/or the parameter information associated with the transmission parameter.

In some embodiments, sending the fourth indication information to the peer device includes:
sending the fourth indication information to the peer device in case that a third condition is met; where
the third condition includes one or more of the following:
   a speed of the sensing target is higher than or equal to a fifth threshold; or
   a sensing signal receive power is lower than or equal to a sixth threshold.

In some embodiments, the time-domain resource indication information is an RRC message, an RRC Information Element, a MAC CE, or physical layer indication information.

In some embodiments, the transmit parameter includes one or more of a send beam parameter or a send power.

In some embodiments, the receive parameter includes a receive beam parameter.

In some embodiments, the sensing data associated with the sensing target includes one or more of the following:
a speed of the sensing target, a distance from the sensing target, a direction of the sensing target, a position of the sensing target, a sensing measurement quantity associated with the sensing target, a speed offset of the sensing target, a distance offset of the sensing target, a direction offset of the sensing target, a sensing measurement quantity offset of the sensing target, a speed range of the sensing target, a distance range of the sensing target, or a direction range of the sensing target.

It should be noted that the division of units in the embodiments of the present application is schematic, and is merely a logical function division. In practical implementations, there may be other division manners. Furthermore, various functional units in various embodiments of the present application may be integrated into one processing unit, or each unit may exist physically alone, or two or more than two units may be integrated into one unit. The above integrated unit may be implemented in the form of hardware, or may also be implemented in the form of a software functional unit.

If the integrated unit is implemented in the form of a software functional unit and sold or used as an independent product, it may be stored in a processor-readable storage medium. Based on such an understanding, the technical solutions of the present application essentially or the part contributing to the prior art or all or part of the technical solutions may be embodied in the form of a software product. The computer software product is stored in a storage medium, including several instructions used for causing a computer device (which may be a personal computer, a server, or a network device, etc.) or a processor to execute all or part of the steps of the methods described in various embodiments of the present application. The aforementioned storage medium includes: various media capable of storing program codes, such as a U disk, a removable hard disk, a read-only memory (ROM), a random access memory (RAM), a magnetic disk, or an optical disc, etc.

It should be noted that, the above apparatus according to the embodiments of the present application may implement all method steps implemented in the above method embodiments, and may achieve identical technical effects. Identical parts and beneficial effects of these embodiments and the method embodiments will not be specifically repeatedly described herein.

In another aspect, embodiments of the present application further provide a non-transitory readable storage medium, where the non-transitory readable storage medium stores a computer program, and the computer program is used for causing a processor to execute the bistatic sensing method according to the above various embodiments.

It should be noted that, the non-transitory readable storage medium according to the embodiments of the present application may implement all method steps implemented in the above method embodiments, and may achieve identical technical effects. Identical parts and beneficial effects of these embodiments and the method embodiments will not be specifically repeatedly described herein.

The non-transitory readable storage medium may be any available medium or data storage device accessible by a computer, including but not limited to a magnetic memory (such as a floppy disk, a hard disk, a magnetic tape, a magneto-optical (MO) disk, etc.), an optical memory (such as a CD, a DVD, a BD, an HVD, etc.), and a semiconductor memory (such as a ROM, an EPROM, an EEPROM, a non-volatile memory (NAND FLASH), a solid state drive (SSD)), etc.

The technical solutions according to the embodiments of the present application are applicable to various systems, especially a 5G system. For example, an applicable system may be a global system for mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems all include a terminal device and a network device. The system may also include a core network part, such as an evolved packet system (EPS), a 5G system (5GS), etc.

The terminal involved in the embodiments of the present application may refer to a device providing voice and/or data connectivity for a user, a handheld device with a wireless connection function, or other processing devices connected to a wireless modem, etc. In different systems, the name of the terminal may also be different. For example, in a 5G system, the terminal may be referred to as user equipment (UE). A wireless terminal device may communicate with one or more core networks (CN) via a radio access network (RAN). The wireless terminal device may be a mobile terminal device, such as a mobile phone (or referred to as a "cellular" phone) and a computer with a mobile terminal device, for example, may be a portable, pocket-sized, handheld, computer built-in, or vehicle-mounted mobile device, which exchange language and/or data with the radio access network. For example, devices such as a personal communication service (PCS) phone, a cordless phone, a session initiated protocol (SIP) phone, a wireless local loop (WLL) station, a personal digital assistant (PDA), etc. The wireless terminal device may also be referred to as a system, a subscriber unit, a subscriber station, a mobile station, a mobile, a remote station, an access point, a remote terminal, an access terminal, a user terminal, a user agent, a user device, which is not limited in the embodiments of the present application.

The network device involved in the embodiments of the present application may be a base station, and the base station may include multiple cells providing services for the terminal. Depending on specific application scenarios, the base station may also be referred to as an access point, or may be a device in an access network that communicates with the wireless terminal device over the air interface through one or more sectors, or other names. The network device may be used for mutually converting received over-the-air frames and Internet Protocol (IP) packets, serving as a router between the wireless terminal device and the rest of the access network, and the rest of the access network may include an Internet Protocol (IP) communication network. The network device may also coordinate attribute management for the air interface. For example, the network device involved in the embodiments of the present application may be a network device (base transceiver station, BTS) in a global system for mobile communications (GSM) or code division multiple access (CDMA), or may be a network device (NodeB) in wideband code division multiple access (WCDMA), or may further be an evolved network device (evolutional Node B, eNB or e-NodeB) in a long term evolution (LTE) system, a 5G base station (gNB) in a 5G network architecture (next generation system), or may be a home evolved node B (HeNB), a relay node, a femto, a pico, etc., which is not limited in the embodiments of the present application. In some network structures, the network device may include a centralized unit (CU) node and a distributed unit (DU) node, and the centralized unit and the distributed unit may also be arranged physically separated.

Multiple input multiple output (MIMO) transmission may be performed between the network device and the terminal device using one or more antennas, and the MIMO transmitting may be single-user MIMO (SU-MIMO) or multiple-ser MIMO (MU-MIMO). According to the form and number of antenna combinations, the MIMO transmission may be 2D-MIMO, 3D-MIMO, FD-MIMO, or massive-MIMO, or may also be diversity transmission or precoding transmission or beamforming transmission, etc.

Those skilled in the art should understand that the embodiments of the present application may be provided as a method, a system, or a computer program product. Therefore, the present application may take the form of an fully hardware implementation, an fully software implementation, or a combination of software and hardware implementation. Moreover, the present application may take the form of a computer program product implemented on one or more computer-usable storage media (including but not limited to a disk memory and an optical memory, etc.) including computer-usable program codes.

The present application is described with reference to flowcharts and/or block diagrams of the method, apparatus (system), and computer program product according to the embodiments of the present application. It should be understood that each flow and/or block in the flowcharts and/or block diagrams, and combinations of flows and/or blocks in the flowcharts and/or block diagrams may be implemented by computer-executable instructions. These computer-executable instructions may be provided to a processor of a general-purpose computer, a special-purpose computer, an embedded processor, or other programmable data processing devices to produce a machine, and the instructions executed via the processor of the computer or other programmable data processing devices form a means for implementing functions specified in one flow or more flows in a flowchart and/or one block or more blocks in a block diagram.

These processor-executable instructions may also be stored in a processor-readable memory that may direct a computer or other programmable data processing devices to operate in a particular manner, and the instructions stored in the processor-readable memory produce an article of manufacture including an instruction apparatus which implements functions specified in one flow or more flows in a flowchart and/or one block or more blocks in a block diagram.

These processor-executable instructions may also be loaded onto a computer or other programmable data processing devices to cause a series of operational steps to be executed on the computer or other programmable devices to produce a computer-implemented process, and the instructions executed on the computer or other programmable devices provide steps for implementing functions specified in one flow or more flows in a flowchart and/or one block or more blocks in a block diagram.

It is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A bistatic sensing method, comprising:
alternately sending and receiving a sensing signal with a peer device, to sense a sensing target; wherein
alternately sending and receiving the sensing signal with the peer device comprises:
receiving a first sensing signal from the peer device on a first time-domain resource;
determining a transmission parameter based on the first sensing signal received on the first time-domain resource, wherein the transmission parameter comprises a transmit parameter for sending a second sensing signal; and
sending the second sensing signal by using the transmit parameter on a second time-domain resource.

2. The method of claim 1, wherein determining the transmission parameter based on the first sensing signal received on the first time-domain resource comprises:
determining sensing data associated with the sensing target based on the first sensing signal received on the first time-domain resource; and
determining the transmission parameter based on the sensing data associated with the sensing target.

3. The method of claim 1 or 2, wherein the transmission parameter further comprises a receive parameter for receiving a sensing signal, and alternately sending and receiving the sensing signal with the peer device further comprises:
receiving the sensing signal from the peer device by using the receive parameter on a third time-domain resource.

4. The method of claim 1, wherein the method further comprises:
receiving time-domain resource indication information; and
determining a time-domain resource used for sending the second sensing signal and/or a time-domain resource used for receiving the first sensing signal based on the time-domain resource indication information, wherein the time-domain resource used for receiving the first sensing signal comprises the first time-domain resource, and the time-domain resource used for sending the second sensing signal comprises the second time-domain resource.

5. The method of claim 3, wherein the method further comprises:
receiving time-domain resource indication information; and
determining a time-domain resource used for sending the sensing signal and/or a time-domain resource used for receiving the sensing signal based on the time-domain resource indication information, wherein the time-domain resource used for receiving the sensing signal comprises the first time-domain resource and/or the third time-domain resource, and the time-domain resource used for sending the sensing signal comprises the second time-domain resource.

6. The method of claim 4 or 5, wherein the time-domain resource indication information comprises first time-domain resource indication information, and the first time-domain resource indication information is used for indicating the time-domain resource used for sending the sensing signal and/or the time-domain resource used for receiving the sensing signal; or
the time-domain resource indication information comprises second time-domain resource indication information and/or third time-domain resource indication information, the second time-domain resource indication information is used for indicating a next or a next group of time-domain resources used for receiving the sensing signal, and the third time-domain resource indication information is used for indicating a next or a next group of time-domain resources used for sending the sensing signal.

7. The method of claim 4 or 5, wherein the time-domain resource indication information comprises a resource configuration or a resource identifier of the indicated time-domain resource.

8. The method of claim 6, wherein the next or the next group of time-domain resources used for receiving the sensing signal is one or more time-domain resources after a first duration from a sending moment of the second time-domain resource indication information, and the next or the next group of time-domain resources used for sending the sensing signal is one or more time-domain resources after a second duration from a sending moment of the third time-domain resource indication information.

9. The method of claim 4 or 5, wherein receiving the time-domain resource indication information comprises:
receiving the time-domain resource indication information sent from the peer device.

10. The method of claim 1, wherein the method further comprises:
initiating the process of alternately sending and receiving the sensing signal with the peer device in case that a first condition is met; or terminating the process of alternately sending and receiving the sensing signal with the peer device in case that a second condition is met; wherein
the first condition comprises one or more of the following:
a speed of the sensing target is lower than or equal to a first threshold; or
a sensing signal receive power is higher than or equal to a second threshold; and
the second condition comprises one or more of the following:
a speed of the sensing target is higher than or equal to a third threshold; or
a sensing signal receive power is lower than or equal to a fourth threshold.

11. The method of claim 1, wherein the method further comprises:
sending first indication information to the peer device, wherein the first indication information is used for indicating initiating or terminating the process of alternately sending and receiving the sensing signal; or
receiving second indication information sent from the peer device; and initiating or terminating the process of sending and receiving the sensing signal with the peer device based on the second indication information.

12. The method of claim 1, wherein the method further comprises:
receiving third indication information sent from the peer device, wherein the third indication information is used for indicating sensing data associated with the sensing target and/or parameter information associated with the transmission parameter; and determining a transmission parameter used for transmitting a next or a next group of sensing signals based on the third indication information; or
sending fourth indication information to the peer device in case that a third condition is met, wherein the fourth indication information is used for indicating sensing data associated with the sensing target and/or parameter information associated with the transmission parameter, wherein the third condition comprises one or more of the following: a speed of the sensing target is higher than or equal to a fifth threshold; or a sensing signal receive power is lower than or equal to a sixth threshold.

13. The method of claim 1, wherein the transmit parameter comprises one or more of a send beam parameter or a send power.

14. The method of claim 3, wherein the receive parameter comprises a receive beam parameter.

15. The method of claim 2, wherein the sensing data associated with the sensing target comprises one or more of the following:
a speed of the sensing target, a distance from the sensing target, a direction of the sensing target, a position of the sensing target, a sensing measurement quantity associated with the sensing target, a speed offset of the sensing target, a distance offset of the sensing target, a direction offset of the sensing target, a sensing measurement quantity offset of the sensing target, a speed range of the sensing target, a distance range of the sensing target, or a direction range of the sensing target.

16. A communication device, comprising a memory, a transceiver, and a processor, wherein the memory is used for storing a computer program; the transceiver is used for transmitting and receiving data under control of the processor; and the processor is used for reading the computer program in the memory and performing the following operations:
alternately sending and receiving a sensing signal with a peer device, to sense a sensing target;
wherein alternately sending and receiving the sensing signal with the peer device comprises:
receiving a first sensing signal from the peer device on a first time-domain resource;
determining a transmission parameter based on the first sensing signal received on the first time-domain resource, wherein the transmission parameter comprises a transmit parameter for sending a second sensing signal; and
sending the second sensing signal by using the transmit parameter on a second time-domain resource.

17. The communication device of claim 16, wherein determining the transmission parameter based on the first sensing signal received on the first time-domain resource comprises:
determining sensing data associated with the sensing target based on the first sensing signal received on the first time-domain resource; and
determining the transmission parameter based on the sensing data associated with the sensing target.

18. The communication device of claim 16 or 17, wherein the transmission parameter further comprises a receive parameter for receiving a sensing signal, and alternately sending and receiving the sensing signal with the peer device further comprises:
receiving the sensing signal from the peer device by using the receive parameter on a third time-domain resource.

19. The communication device of claim 16, wherein the operations further comprise:
receiving time-domain resource indication information; and
determining a time-domain resource used for sending the second sensing signal and/or a time-domain resource used for receiving the first sensing signal based on the time-domain resource indication information, wherein the time-domain resource used for receiving the first sensing signal comprises the first time-domain resource, and the time-domain resource used for sending the second sensing signal comprises the second time-domain resource.

20. The communication device of claim 18, wherein the operations further comprise:
receiving time-domain resource indication information; and
determining a time-domain resource used for sending the sensing signal and/or a time-domain resource used for receiving the sensing signal based on the time-domain resource indication information, wherein the time-domain resource used for receiving the sensing signal comprises the first time-domain resource and/or the third time-domain resource, and the time-domain resource used for sending the sensing signal comprises the second time-domain resource.

21. The communication device of claim 19 or 20, wherein the time-domain resource indication information comprises first time-domain resource indication information, and the first time-domain resource indication information is used for indicating the time-domain resource used for sending the sensing signal and/or the time-domain resource used for receiving the sensing signal; or
the time-domain resource indication information comprises second time-domain resource indication information and/or third time-domain resource indication information, the second time-domain resource indication information is used for indicating a next or a next group of time-domain resources used for receiving the sensing signal, and the third time-domain resource indication information is used for indicating a next or a next group of time-domain resources used for sending the sensing signal.

22. The communication device of claim 19 or 20, wherein the time-domain resource indication information comprises a resource configuration or a resource identifier of the indicated time-domain resource.

23. The communication device of claim 21, wherein the next or the next group of time-domain resources used for receiving the sensing signal is one or more time-domain resources after a first duration from a sending moment of the second time-domain resource indication information, and the next or the next group of time-domain resources used for sending the sensing signal is one or more time-domain resources after a second duration from a sending moment of the third time-domain resource indication information.

24. The communication device of claim 19 or 20, wherein receiving the time-domain resource indication information comprises:
receiving the time-domain resource indication information sent from the peer device.

25. The communication device of claim 16, wherein the operations further comprise:
initiating the process of alternately sending and receiving the sensing signal with the peer device in case that a first condition is met; or terminating the process of alternately sending and receiving the sensing signal with the peer device in case that a second condition is met; wherein
the first condition comprises one or more of the following:
a speed of the sensing target is lower than or equal to a first threshold; or
a sensing signal receive power is higher than or equal to a second threshold; and
the second condition comprises one or more of the following:
a speed of the sensing target is higher than or equal to a third threshold; or
a sensing signal receive power is lower than or equal to a fourth threshold.

26. The communication device of claim 16, wherein the operations further comprise:
sending first indication information to the peer device, wherein the first indication information is used for indicating initiating or terminating the process of sending and receiving the sensing signal; or
receiving second indication information sent from the peer device; and initiating or terminating the process of sending and receiving the sensing signal with the peer device based on the second indication information.

27. The communication device of claim 16, wherein the operations further comprise:
receiving third indication information sent from the peer device, wherein the third indication information is used for indicating sensing data associated with the sensing target and/or parameter information associated with the transmission parameter; and determining a transmission parameter used for transmitting a next or a next group of sensing signals based on the third indication information; or
sending fourth indication information to the peer device in case that a third condition is met, wherein the fourth indication information is used for indicating sensing data associated with the sensing target and/or parameter information associated with the transmission parameter, wherein the third condition comprises one or more of the following: a speed of the sensing target is higher than or equal to a fifth threshold; or a sensing signal receive power is lower than or equal to a sixth threshold.

28. The communication device of claim 16, wherein the transmit parameter comprises one or more of a send beam parameter or a send power.

29. The communication device of claim 18, wherein the receive parameter comprises a receive beam parameter.

30. The communication device of claim 17, wherein the sensing data associated with the sensing target comprises one or more of the following:
a speed of the sensing target, a distance from the sensing target, a direction of the sensing target, a position of the sensing target, a sensing measurement quantity associated with the sensing target, a speed offset of the sensing target, a distance offset of the sensing target, a direction offset of the sensing target, a sensing measurement quantity offset of the sensing target, a speed range of the sensing target, a distance range of the sensing target, or a direction range of the sensing target.

31. A bistatic sensing apparatus, comprising:
a transmit unit, configured to alternately send and receive a sensing signal with a peer device, to sense a sensing target; wherein
alternately sending and receiving the sensing signal with the peer device comprises:
receiving a first sensing signal from the peer device on a first time-domain resource;
determining a transmission parameter based on the first sensing signal received on the first time-domain resource, wherein the transmission parameter comprises a transmit parameter for sending the sensing signal; and
sending the second sensing signal by using the transmit parameter on a second time-domain resource.

32. A non-transitory readable storage medium storing a computer program, wherein the computer program is used to cause a processor to perform the bistatic sensing method according to any of claims 1 to 15.
